# EUROPEAN PATENT APPLICATION

(11) **EP 1 498 252 A2**
(43) Date of publication of application: **19.01.2005**
(21) Application number: 04254209.2
(22) Date of filing: 14.07.2004
(51) Int. Cl.: B29C 45/26, F16L 21/03, F16L 25/14

(54) **Pipe fitting tool for manufacturing pipe fittings in plastics**

(30) Priority: 15.07.2003 NO 20033212
(71) Applicant: Pipelife Norge AS, 6650 Surnadal (NO)
(72) Inventor: Storheil, Jens Martin, 7125 Vanvikan (NO); Maute, Kurt Per, 7125 Vanvikan (NO); Pettersen, Ketil, 70831 Leinstrand (NO)
(74) Representative: Dealtry, Brian

(57) **Abstract**

Pipe fitting tool for manufacturing pipe fittings in plastics, having a spigot end (12) with a smooth inner wall (15) and a smooth outer wall (16), which is connected by radial and axially spaced walls (17), which are integrated to the other parts of the spigot end. The pipe fitting tool comprises an annular casting mould (30) having a number of tongue shaped core bodies (21), forming an annular series parallel to the axis. The core bodies are guided in and out of the casting moulds in the spigot end of the pipe fittings. For each core body (21), is a pressure pin (22), which are arranged for movement in a pressure contact against the adjacent tongue, performing a pre-tensioning force against the core body.

## Description

The present invention relates to a pipe fitting tool according to the preamble of patent claim 1, for manufacturing pipe fittings in plastics.

### Background

Norwegian Patent application 310943 discloses a method for manufacturing pipe fittings having a spigot end, which have an outer wall and an inner wall, which are mutually connected with axial and radially spaced ribs. In this way light spigot ends can be made, where the the volume of the spigot ends consist of longitudinal cavities between rib-shaped spacing walls. This construction has been utilized with advantage where the total overall height is sufficient enough to allow tongue shaped core bodies, with a certain thickness and strength, to remain in position during injection moulding.

A pipe fitting tool for making pipe fittings like the aforementioned, comprises an annular casting mould, in which a number of tongue shaped core bodies forms an annular row, parallel to the axis, and which is guided in and out of the casting moulds in the spigot end of the pipe fitting. By reducing the thickness of the core body to reduce the total wall thickness, the core bodies are susceptible to bending out or in, due to the core bodies not being sufficiently rigid.
During the moulding process, an unstable situation can easily arise, by a pressure difference between the two sides of the tongue shaped core bodies, causing the core bodies to bend, as they are too weak to resist the pressure. The result of this is failure, because the core bodies will be bent down toward the side having the lowest pressure.

### Object

The main object of the present invention is to provide a pipe fitting tool for manufacturing pipe fittings of plastics, which removes the aforementioned disadvantage, and makes it possible to reduce the distance between the inner and outer wall, without affecting the margins in the dimension and without any arising error.

### Example

The invention is illustrated in the drawings, wherein
Figure 1 is a view of the spigot of a pipe fitting where a smooth outer wall is connected to an inner wall with radially spaced pieces,
Figure 2 is a partially sectioned side elevation of the pipe fitting as shown in Fig.1,
Figure 3 is a partially sectioned axial elevation of a pipe fitting tool according to an embodiment of the invention with hydraulic drive,
Figure 4 is a cross-section through an other embodiment of a pipe fitting tool according to the invention, with rotary motor as activator,
Figure 5 shows the augmented detail as shown in Figure 4,
Figure 6 is a partially sectioned axial elevation of the embodiment of Figure 4, and
Figure 7 is a partially sectioned axial elevation of the embodiment of Figure 4.

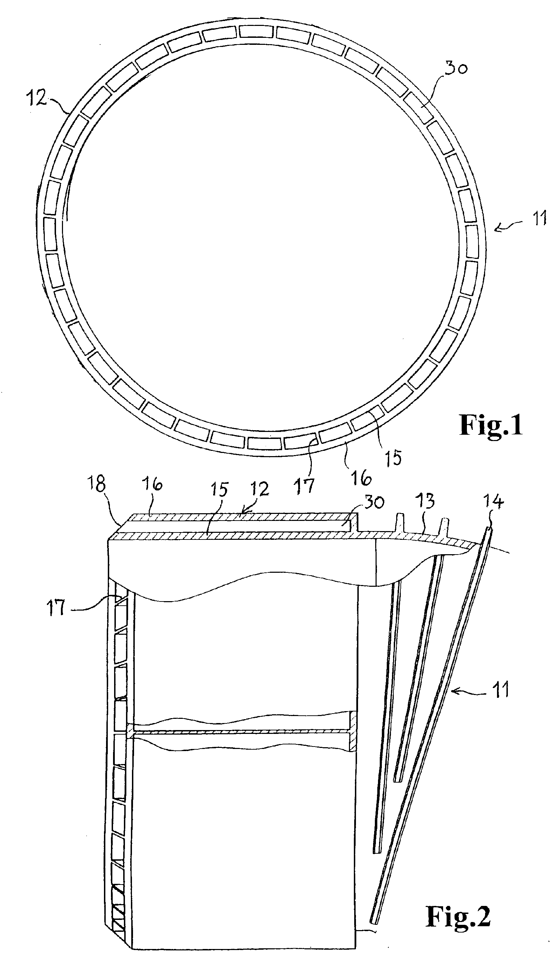

Figures 1 and 2 show a pipe fitting 11 with a spigot end 12, which may be shaped together with a socket end, or transition, to an another part of a pipe fitting. In this case, indicated is a transition 13 forming a curve in relation to the axis of the spigot end, and on the curve there are three partial circumambiently, partially sectorial formed, outer radial ribs 14. The spigot 12 has a smooth inner wall 15, and an equivalent smooth outer wall 16, which is connected to the inner wall 15 by radial and axially spaced walls 17. The number shown in the example is 36. In this way they are arranged over an angle of 10° on the circumference. The spigot end 12 is externally chamfered with a bevel edge 18 forming an 45° angle with the axis of the pipe.

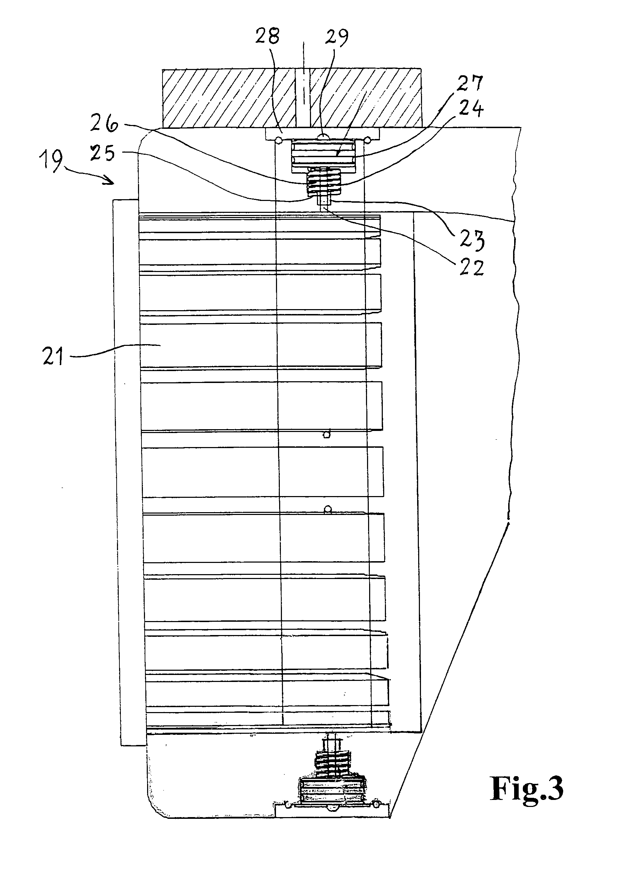

Figure 3 shows an embodiment of a pipe fitting tool 19 according to the invention, with an outer mother mould 20 having a cylindrical inside area. Near to the area, there is placed an annular row of tongue shaped core bodies 21, the number shown in the example is 36, which can be guided in and out of engagement with the outer mother mould 20 by known means, which are not shown. At the outer end of the formed tongues 21, there is, for each of the core bodies 21, a pressure pin 22 located in a radially oriented bore 23 in the outer mother mould. The pressure pin may be cylindrical, quadratic, rectangular or be of another form. Each pressure pin 22, has a helical spring 24, forming a contact inwards against a grading step 25 in the radially oriented bore 23 and against a cylindrical expansion 26 in the pressure pin 22 and accordingly forming a piston in a bore 27. All the piston bore's are externally connected by a ring 28, or an annular and closed cavity. In the ring 28 there is milled in a groove 29 for a pressure medium, such as compressed air or hydraulic oil.

Instead of the ring 28, there can be designed a semicircular ring groove in each half of the split pipe fitting tool. The grooves are closed outwards by enclosure of the pipe fitting tool, and are connected to the supply of a pressure medium in a practical way.

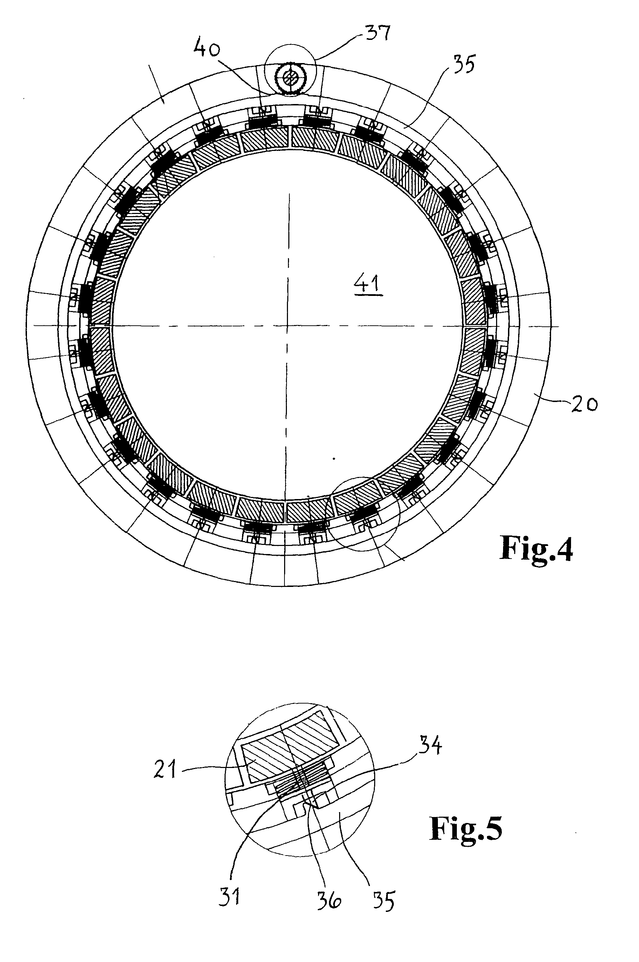

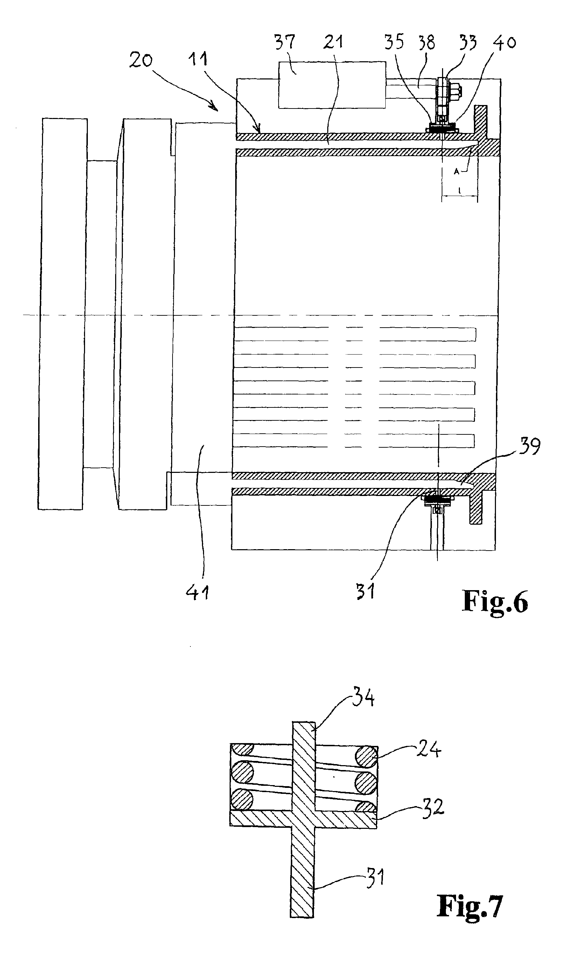

Figures 4-7 show an alterative embodiment of the invention. Figure 4 illustrates a rotating ring 35 having toothed segments 40, and driven by an engine 37. The ring 35 has, inwardly arranged for each core body, a push cam 36, on an inclined plane facing inwardly against a pressure pin 31, as shown in Figure 6.
The engine 37 may be controlled and thus rotate the ring 35, with the push cams 36, sufficient enough to activate the piston rod 34 for the pressure pins.

Figure 6 shows the configuration of a pressure pin 31, with a piston in the same body, where the pressure pin 31 is centrally situated in relation to the piston body 32. The pressure pin can be cylindrical, quadratic, rectangular or be of another shape. Also, the inner part of the pressure pin 31 is surrounded by a helical spring 24.

Figure 7 shows a core body 21 with an internally bevelled terminal face 39. The bevel may be at an angle of for example, 15°, and helps to press the tongue shaped core bodies 21 outwards, as plastic mass is supplied to the pipe fitting tool at high pressure. Figure 7 also shows the engine 37, with an axle 38 and a toothed wheel 33, for transfer to a toothed segment 40 on the rotatable ring 35.

### Mode of operation

The tongue shaped core bodies 21 are pre-tensioned by the pressure pins 22;31 during the phase of insertion of the molten plastic mass. They effectively prevent bending out or bending in, and inaccurate thickness of the wall. The bevelled end face 39 in the tongue shaped core bodies ensures these are being pressed against the pressure pins 22;31 and not in the opposite direction. After the formed cavity is filled, the pressure pins 22;31 are withdrawn as a result of the force provided by a helical springs 24.
The thickness of the inner part of the pressure pins 22;31 is so small (less then 4 mm), that the cavity created will, as they are withdrawn, be filled, due to the plastic mass remaining in a molten state for a few seconds after moulding is finished. There will be a residual pressure from the injection piston of the injection moulding machine, which will result in the cavities, after the pins are removed, being filled.

### Modifications

In an alternative design, can against the pressure pin 31, be placed a spring loaded ring with a conical part against the connecting rod 34 of the pressure pin, which is movable forwards by supplying a pressure medium to a closed cavity behind the ring.
The invention can also be designed with two annular, sectored pistons, driven by a hydraulic engine, or by pneumatics, in the longitudinal direction of the pipe fitting tool, and as an activator for the pressure pins 22. The ends of the pistons and/or the ends of the pressure pins may be bevelled to produce displacement of the pressure pins.
In the examples, the pressure pins are shown as being externally arranged in relation to the core bodies. It is also possible to locate the pressure pins, and the associated activating equipment, radially inside the pipe fitting tool.

## Claims

1. Pipe fitting tool for manufacturing pipe fittings in plastics, having a spigot end (12) with a smooth inner wall (15) and a smooth outer wall (16), which is connected by radial and axially spaced walls (17), which are integrated to the other parts of the spigot end, where the pipe fitting tool comprises an annular casting mould (30) having a number of tongue shaped core bodies (21), forming an annular series parallel to the axis, and which are guided in and out of the casting moulds (30) in the spigot end of the pipe fittings, **characterized in that**, for each core body (21), arranged internally or externally, is pressure pin (22;31), which are arranged for movement in a pressure contact against the adjacent tongue, performing a pre-tensioning force against the core body.

2. Pipe fitting tool according to claim 1, **characterized in that** the core bodies (21) are bevelled radially inwards or outwards, having an angle of, for example, 15°, in relation to the axis on the opposite side from the location of the pressure pins (22;31).

3. Pipe fitting tool according to claim 1 or 2, **characterized in that** the pressure pins (22;31) are arranged a distance in from the free end of the core bodies (21) constituting 0-40% of the length.

4. Pipe fitting tool according to any one of claims 1-3, **characterized in that** the pressure pins (22) comprise a piston (26) at the outer end, for hydraulic or pneumatic pressure.

5. Pipe fitting tool according to claim 4, with externally arranged pressure pins (22), **characterized in that** the pistons (26) are surrounded by a closed ring (28), having a groove (29) for supply of pressure medium.

6. 5. Pipe fitting tool according to claim 4, with external arranged pressure pins (22), **characterized in that** the pistons (26) are surrounded by a closed cavity for the supply of a pressure medium.

7. Pipe fitting tool according to any one of the claims 1-3, **characterized in that** the pressure pins (31) are enclosed by a rotating ring (35), having pressure cams (36) for pressing in the pressure pins (31).

8. Pipe fitting tool according to any one of claims 1-3, **characterized in that** against a pressure pin (31) is arranged an annular, sectored piston, as an activator against the piston rod (34) of the pressure pin, moving axially forwards and backwards by one or several connected cylinders (pneumatic or hydraulic oil).

9. Pipe fitting tool according to any one of claims 1-3, **characterized in that** against the pressure pin (31) is arranged a spring-loaded ring, having a cone against the piston rod (34) of the pressure pin, which moves axially forwards by the supply of a pressure medium in a closed cavity at the back of the ring.

10. Pipe fitting tool according to any of claims 1-9, **characterized in that** at each pressure pin (22;31), is arranged a helical spring (24) for pre-tensioning of the pressure pins (22;31) against an outer, drawn out position, with the end outside the internally mould cavity or the outside of the internal main core (41) of the pipe fitting tool.

11. Pipe fitting tool according to any one of claims 1-10, **characterized in that** the pressure pins (22;31) are to be withdrawn after the end of filling of the mould, while the plastic mass is still molten, such that the residual pressure in the plastic mass will fill the cavities in the spigots outer layer (16) or inner layer (15), where the pressure pins (22;31) have been situated.
